# EUROPEAN PATENT SPECIFICATION

(11) **EP 2 147 818 B1**
(45) Date of publication and mention of the grant of the patent: **17.07.2013**
(21) Application number: 09075242.9
(22) Date of filing: 28.05.2009
(51) Int. Cl.: B60N 2/28

(54) **A bucket suitable for a child vehicle seat as well as such a child vehicle seat**
Für einen Kinderfahrzeugsitz geeignete Schale sowie solch ein Kinderfahrzeugsitz
Sceau adapté au siège enfant de véhicule ainsi qu'un siège enfant pour véhicule

(30) Priority: 23.07.2008 NL 1035742
(43) Date of publication of application: 27.01.2010
(73) Proprietor: Maxi Miliaan B.V., 5704 RD Helmond (NL)
(72) Inventor: Karremans, Taco, 5615 AH Eindhoven (NL); Stockman, Petrus Henricus Maria, 6433 AX Hoensbroek (NL)
(74) Representative: Veldman-Dijkers, Cornelia G. C.

(56) References cited:
- EP-A- 1 433 653
- EP-A- 1 625 983
- EP-A- 1 741 593
- US-B1- 6 189 970

## Description

The invention relates to a bucket suitable for a child vehicle seat, which bucket is provided with a seat comprising a seat portion and a backrest that joins said seat portion, said seat being provided with at least one stiffening rib on a side of the backrest remote from the seat portion.

The invention further relates to a child vehicle seat provided with such a bucket.

Such a bucket is usually provided with a belt system comprising shoulder belts and lap belts, by means of which a child can be secured in the bucket. The bucket itself is attached to a vehicle via separate means, such as a safety belt or a so-called isofix system.

With such a bucket, which is known from European patent application EP-A1-1.741.593, the seat is provided, on a side of the backrest remote from the seat portion, with two stiffening ribs extending parallel to each other. Said stiffening ribs also extend under the seat portion. The stiffening ribs give the seat additional stiffness, so that forces exerted on the child and on the bucket, for example in case of a collision, can be absorbed in an effective manner. The known bucket is formed as an integrated part, so that a solid connection between the seat and the stiffening ribs is obtained. However, a drawback of the use of such a bucket formed as one unit is the fact that it limits the freedom of design, since requirements made of the seat as well as requirements made of the stiffening ribs must be taken into account at the same time.

The object of the invention is to provide a bucket in which this drawback is avoided.

This object is accomplished with the bucket according to the invention in that the stiffening rib and the seat are produced as separate parts, after which the stiffening rib is connected to the seat.

Producing the seat and the stiffening rib as separate parts makes it possible to realise an ergonomically optimum seat and at the same time maintain a certain degree of freedom of design. The seat may be made of any suitable material. Since the forces are absorbed by the stiffening ribs, the seat itself need not be sturdy and may have a relatively small wall thickness. The smaller the wall thickness, the shorter the time required for forming the seat, for example by injection moulding.

The stiffening ribs may be made of a material suitable for absorbing forces and may have a relatively large wall thickness. Since the seat and the stiffening ribs are produced as separate parts, the relatively large difference in wall thickness does not lead to problems, for example upon injection moulding. Such problems would actually occur if the bucket were made in one piece.

It has to be noted that EP1433653 and US6218970 discloses buckets comprising a seat and stiffening ribs, which bucket is formed as one integrated unit.

Another advantage of separately the stiffening ribs and the seat as separate parts is that it is possible to use different stiffening ribs for one and the same seat, depending on the specific requirements made of a bucket. Thus it is for example possible to produce a bucket provided with a particular stiffening rib and test it in crash tests, for example. If said tests should demonstrate that the stiffening ribs need to be stiffened or that less stiffness will suffice, there is no need to adapt the mould or other tool for forming the seat, but it will suffice to merely adapt the mould or other tool for forming the stiffening rib. The stiffness of the bucket can thus be adapted more easily, for example if views or requirements imposed by the authorities should change in the course of time.

One embodiment of the bucket according to the invention is characterised in that the stiffening rib is made of another material than the seat.

Forming the seat of polypropylene and forming the stiffening ribs of polypropylene filled with glass fibres, for example, makes it possible to optimise the material selection in dependence on the requirements made of the seat and the stiffening ribs, for example.

Another embodiment of the bucket according to the invention is characterised in that the stiffening rib is detachably connected to the seat.

The stiffening rib is connected to the seat by means of a screwed connection, for example. Assembly will thus be relatively easy.

It is also possible to clamp the stiffening ribs between the seat and a shell-shaped rear wall. This, too, makes assembly relatively easy, whilst in addition the ribs are hidden from view, so that a taut appearance is obtained.

Yet another embodiment of the bucket according to the invention is characterised in that the bucket is provided with two stiffening ribs extending substantially parallel to each other, which stiffening ribs are interconnected by means of at least one spacer.

The spacers and the stiffening ribs provide the seat with the proper stiffness. The spacers make it possible to use two relatively thin stiffening ribs, so that a maximum stiffness can be realised while using a minimum amount of material.

Yet another embodiment of the bucket according to the invention is **characterised in that** said spacer comprises a rod extending transversely to the stiffening ribs.

Such a rod is relatively simple. Moreover, such a rod is also suitable for use as a point of engagement, for example for a belt system or for connecting/disconnecting a bucket to/from a chassis.

Yet another embodiment of the bucket according to the invention is **characterised in that** the backrest is provided with an opening, whilst a shoulder belt guide extends between the stiffening ribs, which shoulder belt guide is disposed opposite the opening provided in the backrest.

Since the shoulder belt guide is connected to the stiffening ribs, forces exerted on the shoulder belts by the child will be directly transmitted to the stiffening ribs via the shoulder belt guide in use, when a child is secured in the seat inter alia by means of shoulder belts. The shoulder belts will exert hardly any forces on the seat.

Another embodiment of the bucket according to the invention is **characterised in that** the stiffening rib is L-shaped, extending over the backrest and the seat portion.

As a result of the presence of the L-shaped stiffening rib, forces will be optimally absorbed, for example in case of a frontal collision of the bucket, so that there will be hardly any deformation of the stiffening ribs and thus no deformation of the seat. At the location where to L-shaped stiffening ribs are interconnected by rods extending transversely to the stiffening ribs, the forces exerted in case of a lateral collision will be absorbed by the L-shaped ribs, the rods and the seat.

The invention will be explained in more detail with reference to the drawings, in which:
Figure 1 is an exploded view of a bucket according to the invention;
Figure 2 is an exploded view of the bucket according to the invention shown in figure 1, in which the stiffening ribs are interconnected;
Figure 3 is a perspective view of the bucket according to the invention shown in figures 1 and 2, in which the seat is connected to the stiffening ribs;
Figure 4 is a perspective view of a child vehicle seat according to the invention;
Figure 5 is a perspective view of a part of the child vehicle seat shown in figure 4.

Like parts are indicated by the same numerals in the figures.

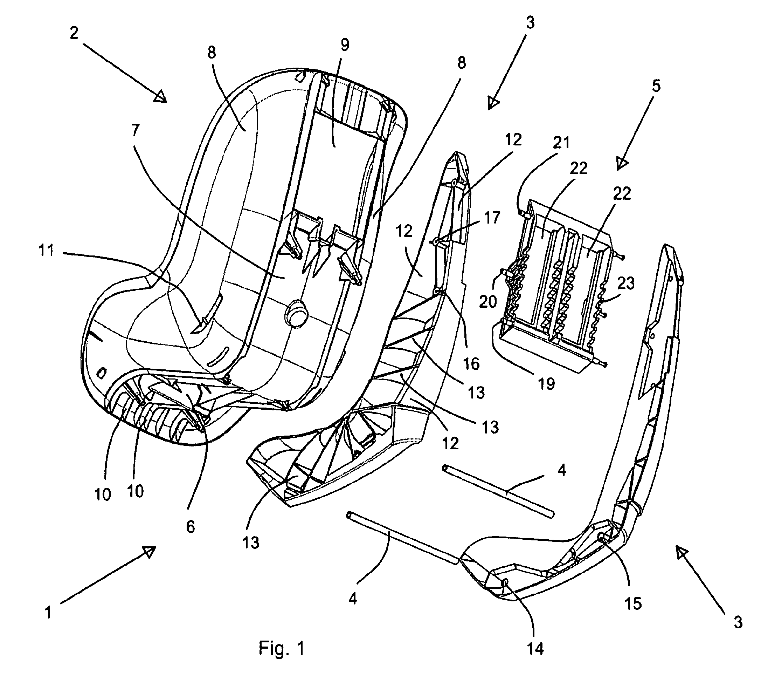

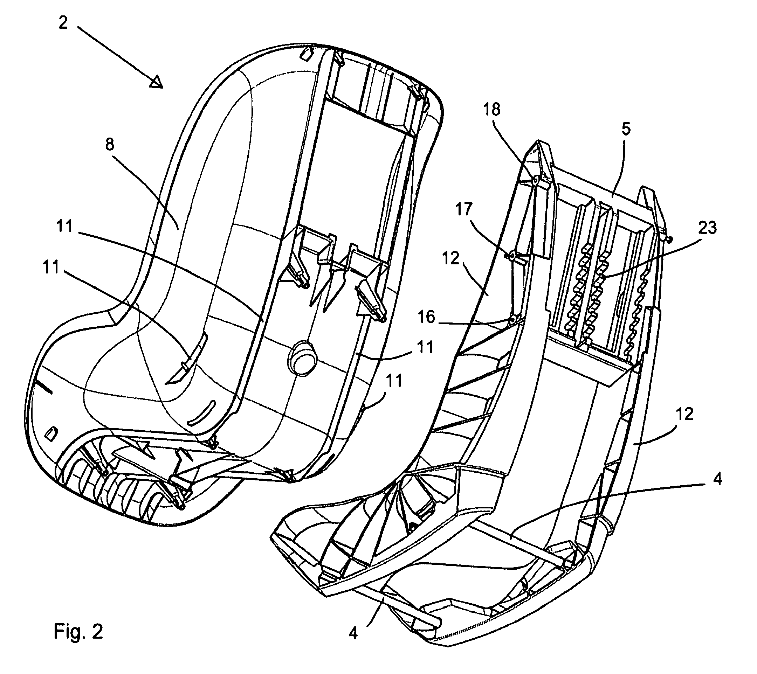

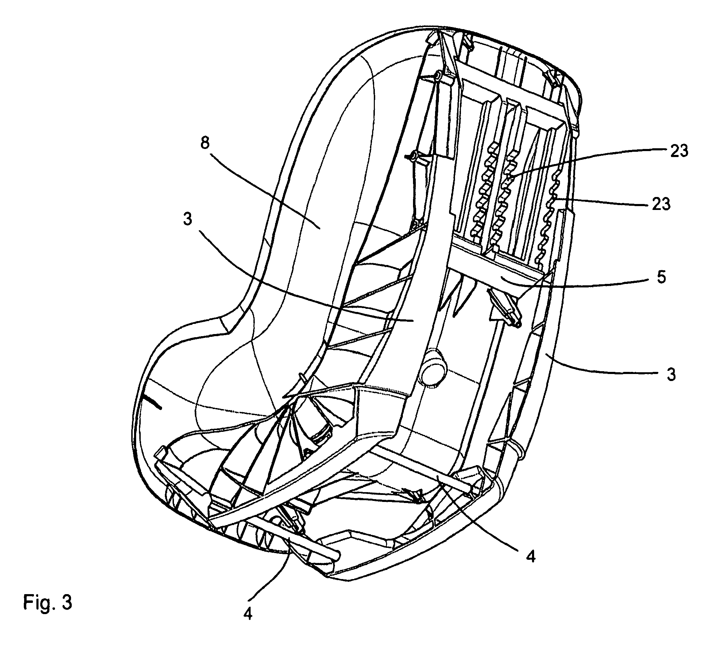

Figures 1-3 show a bucket 1 according to the invention, which comprises a seat 2, two stiffening ribs 3, two rods 4 interconnecting the stiffening ribs 3 and a shoulder belt guide 5 extending between the stiffening ribs 3.

The seat 2 comprises a seat portion 6 and a backrest 7 joining said seat portion 6. Lateral supports 8 are disposed or on either side of the seat portion 6 and the backrest 7. An opening 9 is provided in the backrest 7, which opening is located opposite the shoulder belt guide 4 in the assembled condition of the bucket. The seat 2 is made of a relatively thin material, such as polypropylene, ABS, HDPE, ASA and PA, for example.

Because a relatively thin material is used, the seat 2 can be produced in a relatively short time, for example by injection-moulding. Furthermore, relatively little material is required, so that the seat 2 is relatively light in weight.

The thickness is 1.2 - 3 mm, for example, preferably 1.7 - 2.0 mm.

Relatively thin stiffening strips 10 are provided for stiffening the seat 2. The seat 2 is further provided with positioning strips 11, against which the stiffening ribs 3 can be positioned in a relatively simple manner for being aligned with the seat 2.

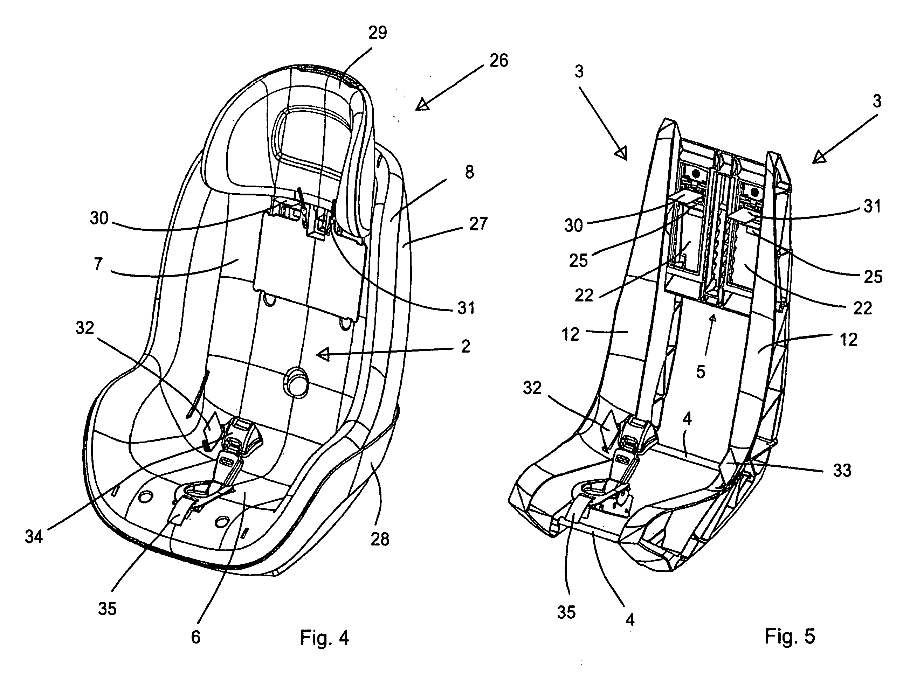

Each stiffening rib 3 comprises a wall 12 extending substantially along the entire circumference of the stiffening rib 3, with connecting walls 13 extending between opposite walls 12. The stiffening rib 3 is L-shaped and, in the assembled condition of the bucket 1, extends over a side of the backrest 7 remote from the seat portion 6, or, in other words, the rear side of the backrest 7, and over an underside of the seat portion 6. The number of connecting walls 13, the angles between said connecting walls 13 and the walls 12, the wall thicknesses of the walls 12 and the connecting walls 13 etc determine the stiffness of the stiffening rib 3. A stiffening rib 3 that meets the requirements made thereof can be realised by means of computer models and/or experimental models. Each stiffening rib 3 is further provided with points of attachment 14, 15, 16, 17, 18 for connecting the stiffening rib 3 to the rods 4 and the shoulder belt guide 5, respectively. The shoulder belt guide 5 is provided with connecting pins 19, 20, 21, which are to mate with the points of attachment 16, 17, 18 in the stiffening ribs 3. The shoulder belt guide 5 is further provided with two substantially vertically extending openings 22, which are bounded on either side thereof by a number of recesses 23 located one above the other. In said recesses, a rod 25 (see figure 5) can for example be positioned, over which rod the shoulder belts of a belt system can be passed. A vertical adjustment of the shoulder belts is realised by positioning the pin 25 in another recess 23.

Figure 4 shows a perspective view of a child vehicle seat 26 according to the invention, which is provided with the bucket 2 shown in figures 1-3. The child vehicle seats 26 further comprises a shell-shaped rear wall 27, which extends over the stiffening ribs 3 on a side remote from the seat 2 and which abuts against the lateral supports 8 of the seat 2 on either side. On the underside, the child vehicle seat 26 comprises a shell-shaped part 28, which covers the stiffening ribs 3 on a side remote from the seat portion 6. The child vehicle seat 26 further comprises a headrest 29, which is vertically adjustable in combination with the shoulder belts. The child vehicle seat 26 is provided with a belt system, which for example corresponds to the belt system described in the present applicant's European patent EP-B1-1.625.983. Such a belt system comprises two shoulder belts 30, 31, two lap belts 32, 33 and a crotch part 34. The shoulder belts 30, 31 are interconnected via the rear side of the backrest 7 and under the seat portion 6 and terminate in a belt tensioning element 35. The lap belts and the shoulder belts are pulled firmly into contact with a child seated in the bucket 2 by drawing the belt tensioning element 35 tighter. In case of a collision of a vehicle in which the child vehicle seat 26 is used, forward forces are exerted by the child, inter-alia on the shoulder belts 30, 31. The pins 25 are preferably pivotable in the direction of the backrest 7, in a manner which is described in great detail in the applicant's aforesaid European patent EP-B1-1 625 983. As a result, the shoulder belts 30, 31 will immediately be blocked in case of a collision. The forces that are exerted in such a case are directly transmitted to the shoulder belt guide 5 and the stiffening ribs 3 via the pins 25. The crotch part 34 may be connected to the seat portion 6, in which case the seat portion 6 will be provided with relatively thin stiffening strips 10 at the location of the crotch part 34. It is also possible, however, not to connect the crotch part 34 to the seat portion 6 but to the rod 4 disposed thereunder, in which case also the forces exerted over the crotch part 34 will be directly transmitted to the stiffening ribs 3. If the crotch part 34 is connected to the rod 4, it is possible to use pins 25 which are not pivotable, in which case the force exerted in case of a collision will be transmitted to the stiffening ribs 3 in part via the rods 25 and in part via the rod 4.

## Claims

1. A bucket (1) suitable for a child vehicle seat, which bucket (1) is provided with a seat (2) comprising a seat portion (6) and a backrest (7) that joins said seat portion (6), said seat (2) being provided with at least one stiffening rib (3) on a side of the backrest (7) remote from the seat portion (6), **characterised in that** the stiffening rib (3) and the seat (2) are produced as separate parts, after which the stiffening rib (3) is connected to the seat (2).

2. A bucket (1) according to claim 1, **characterised in that** the stiffening rib (3) is made of another material than the seat (2).

3. A bucket (1) according to claim 1 or 2, **characterised in that** the stiffening rib (3) is detachably connected to the seat (2).

4. A bucket (1) according to any one of the preceding claims, **characterised in that** the bucket (1) is provided with two stiffening ribs (3) extending substantially parallel to each other, which stiffening ribs (3) are interconnected by means of at least one spacer.

5. A bucket (1) according to claim 4, **characterised in that** said spacer comprises a rod (4) extending transversely to the stiffening ribs (3).

6. A bucket (1) according to either one of the preceding claims 4 or 5, **characterised in that** the backrest (7) is provided with an opening (9), whilst a shoulder belt guide (5) extends between the stiffening ribs (3), which shoulder belt guide (5) is disposed opposite the opening (9) provided in the backrest (7).

7. A bucket (1) according to claim 6, **characterised in that** the bucket (1) is provided at least with shoulder belts (30, 31), wherein forces exerted on the shoulder belts (30, 31) in use are transmitted to the stiffening ribs (3) via the shoulder belt guide (5).

8. A bucket (1) according to claim 6 or 7, **characterised in that** the shoulder belt guide (5) comprises a vertical adjustment provision for adjusting the height of the shoulder belts (30, 31).

9. A bucket (1) according to any one of the preceding claims, **characterised in that** the stiffening rib (3) is L-shaped, extending over the backrest (7) and the seat portion (6).

10. A child vehicle seat provided with a bucket (1) according to any one of the preceding claims.

11. A child vehicle seat according to claim 10, **characterised in that** the bucket (1) is detachably connected to a chassis.

12. A child vehicle seat according to claim 10 or 11, **characterised in that** the bucket (1) is pivotally connected to the chassis.

13. A child vehicle seat according to claim 10, 11 or 12, **characterised in that** the bucket (1) is attached to the chassis by means of a rod extending between the two stiffening ribs (3).

## Patentansprüche

1. Schale (1), geeignet für einen Kinderfahrzeugsitz, wobei die Schale (1) mit einem Sitz (2) versehen ist, der einen Sitzabschnitt (6) und eine an den Sitzabschnitt (6) anschließende Lehne (7) umfasst, wobei der Sitz (2) mit mindestens einer Verstärkungsrippe (3) auf der von Sitzabschnitt (6) entfernten Seite der Lehne (7) versehen ist, **dadurch gekennzeichnet, dass** die Verstärkungsrippe (3) und der Sitz (2) als getrennte Teile hergestellt werden und danach die Verstärkungsrippe (3) mit dem Sitz (2) verbunden wird.

2. Schale (1) nach Anspruch 1, **dadurch gekennzeichnet, dass** die Verstärkungsrippe (3) aus einem anderen Material als der Sitz (2) hergestellt ist.

3. Schale (1) nach Anspruch 1 oder 2, **dadurch gekennzeichnet, dass** die Verstärkungsrippe (3) abnehmbar mit dem Sitz (2) verbunden ist.

4. Schale (1) nach einem der vorangehenden Ansprüche, **dadurch gekennzeichnet, dass** die Schale (1) mit zwei Verstärkungsrippe (3) versehen ist, die im Wesentlichen zueinander parallel verlaufen, wobei die Verstärkungsrippe (3) mittels mindestens eines Abstandhalters untereinander verbunden sind.

5. Schale (1) nach Anspruch 4, **dadurch gekennzeichnet, dass** der Abstandhalter einen quer zu den Verstärkungsrippe (3) verlaufenden Stab (4) umfasst.

6. Schale (1) nach einem der vorangehenden Ansprüche 4 oder 5, **dadurch gekennzeichnet, dass** die Lehne (7) mit einer Öffnung (9) versehen ist, während sich zwischen den Verstärkungsrippe eine Schultergurtführung (5) erstreckt, wobei die Schultergurtführung (5) gegenüber der in der Lehne (7) vorgesehenen Öffnung (9) angeordnet ist.

7. Schale (1) nach Anspruch 6, **dadurch gekennzeichnet, dass** die Schale (1) mindestens mit Schultergurten (30, 31) versehen ist, wobei die beim Gebrauch auf die Schultergurte (30, 31) ausgeübten Kräfte über die Schultergurtführung (5) auf die Verstärkungsrippen (3) übertragen werden.

8. Schale (1) nach Anspruch 6 oder 7, **dadurch gekennzeichnet, dass** die Schultergurtführung (5) eine vertikale Einstellmöglichkeitumfasst, um die Höhe des Schultergurt (30, 31) einzustellen.

9. Schale (1) nach einem der vorangehenden Ansprüche, **dadurch gekennzeichnet, dass** die Verstärkungsrippe (3) L-förmig ist und sich über die Lehne (7) und den Sitzabschnitt (6) erstreckt.

10. Kinderfahrzeugsitz, versehen mit einer Schale (1) nach einem der vorangehenden Ansprüche.

11. Kinderfahrzeugsitz nach Anspruch 10, **dadurch gekennzeichnet, dass** die Schale (1) abnehmbar mit einem Untergestell verbunden ist.

12. Kinderfahrzeugsitz nach Anspruch 10 oder 11, **dadurch gekennzeichnet, dass** die Schale (1) schwenkbar mit dem Untergestell verbunden ist.

13. Kinderfahrzeugsitz nach Anspruch 10, 11 oder 12, **dadurch gekennzeichnet, dass** die Schale (1) mittels einer zwischen den zwei Verstärkungsrippen (3) verlaufenden Stange mit dem Untergestell verbunden ist.

## Revendications

1. Sceau (1) adapté à un siège enfant pour véhicule, lequel seau (1) est doté d'un siège (2) comprenant une partie de siège (6) et un dossier (7) qui rejoint ladite partie de siège (6), ledit siège (2) étant doté d'au moins une nervure de renforcement (3) sur un côté du dossier (7) à distance de la partie de siège (6), **caractérisé en ce que** la nervure de renforcement (3) et le siège (2) sont produits comme des pièces séparées, après quoi la nervure de renforcement (3) est reliée au siège (2).

2. Sceau (1) selon la revendication 1, **caractérisé en ce que** la nervure de renforcement (3) est fabriquée en un autre matériau que le siège (2).

3. Sceau (1) selon la revendication 1 ou 2, **caractérisé en ce que** la nervure de renforcement (3) est reliée de manière détachable au siège (2).

4. Sceau (1) selon l'une quelconque des revendications précédentes, **caractérisé en ce que** le sceau (1) est doté de deux nervures de renforcement (3) s'étendant sensiblement parallèlement l'une à l'autre, lesquelles nervures de renforcement (3) sont interconnectées à l'aide d'au moins un élément d'écartement.

5. Sceau (1) selon la revendication 4, **caractérisé en ce que** ledit élément d'écartement comprend une tige (4) s'étendant transversalement aux nervures de renforcement (3).

6. Sceau (1) selon l'une quelconque des revendications précédentes 4 ou 5, **caractérisé en ce que** le dossier (7) est doté d'une ouverture (9) alors qu'un guidage de ceinture diagonale (5) s'étend entre les nervures de renforcement (3), lequel guidage de ceinture diagonale (5) est disposé à l'opposé de l'ouverture (9) prévue dans le dossier (7).

7. Sceau (1) selon la revendication 6, **caractérisé en ce que** le seau (1) est doté au moins de ceintures diagonales (30, 31), dans lequel des forces exercées sur les ceintures diagonales (30, 31) sont transmises en utilisation aux nervures de renforcement (3) via le guidage de ceinture diagonale (5).

8. Sceau (1) selon la revendication 6 ou 7, **caractérisé en ce que** le guidage de ceinture diagonale (5) comprend une prévision d'ajustement vertical pour ajuster la hauteur des ceintures diagonales (30, 31).

9. Sceau (1) selon l'une quelconque des revendications précédentes, **caractérisé en ce que** la nervure de renforcement (3) présente une forme de L, s'étendant sur le dossier (7) et la partie de siège (6).

10. Siège enfant pour véhicule doté d'un seau (1) selon l'une quelconque des revendications précédentes.

11. Siège enfant pour véhicule selon la revendication 10, **caractérisé en ce que** le seau (1) est relié de manière détachable à un châssis.

12. Siège enfant pour véhicule selon la revendication 10 ou 11, **caractérisé en ce que** le seau (1) est relié au châssis de manière pivotable.

13. Siège enfant pour véhicule selon la revendication 10, 11 ou 12, **caractérisé en ce que** le seau (1) est fixé au châssis au moyen d'une tige s'étendant entre les deux nervures de renforcement (3).
